# EUROPÄISCHE PATENTSCHRIFT

(11) **EP 0 859 710 B1**
(45) Veröffentlichungstag und Bekanntmachung des Hinweises auf die Patenterteilung: **13.06.2001**
(21) Anmeldenummer: 96938050.0
(22) Anmeldetag: 04.11.1996
(51) Int. Cl.: B60R 21/26

(54) **GASGENERATOR**
GAS GENERATOR
GENERATEUR DE GAZ

(30) Priorität: 08.11.1995 DE 19541583
(43) Veröffentlichungstag der Anmeldung: 26.08.1998
(73) Patentinhaber: TRW Airbag Systems GmbH & Co. KG, 84544 Aschau am Inn (DE)
(72) Erfinder: BAUER, Hermann, D-89518 Heidenheim (DE); FÜRST, Franz, D-85098 Grossmehring (DE); BENDER, Richard, D-91207 Lauf (DE); HOFBAUER, Ingrid, D-80805 München (DE)
(74) Vertreter: Sulzbach, Werner, Dipl.-Chem. Dr.
(86) Internationale Anmeldenummer: EP9604772
(87) Internationale Veröffentlichungsnummer: WO9717235

(56) Entgegenhaltungen:
- EP-A- 0 382 552
- EP-A- 0 496 267
- GB-A- 2 271 966
- US-A- 4 938 501
- US-A- 4 950 458
- US-A- 5 387 009

## Beschreibung

**Die Erfindung betrifft** Gasgeneratoren, insbesondere für passive Rückhaltesysteme in Kraftfahrzeugen nach dem Oberbegriff des Patentanspruches 1. Ein derartiger Gasgenerator ist aus der schrifft EP-A-0 382 552 bekannt.

Es sind Rückhaltesysteme für Fahrzeuginsassen bekannt, die mit einem Gassack (Airbag) ausgestattet sind, der durch ein, von einem im Gasgenerator pyrotechnisch erzeugten Gas aufgeblasen wird.

So sind einmal Gasgeneratoren bekannt, dessen Brenn- und Filterkammer ringförmig um eine Anzündeinheit angeordnet und aus schalenförmigen Einzelteilen aufgebaut sind. Diese Generatoren werden als Rundgasgeneratoren bezeichnet. Werden nach dem Bestücken beide Teile miteinander verbunden, bilden sich Anzünd-, Brenn- und Filterkammer aus, welche toroidförmig und konzentrisch zueinander angeordnet sind und durch Wände abgetrennt werden. Diese schalenförmigen Einzelteile bilden jeweils einen Boden und ringförmige, konzentrisch angeordnete Wandungen. Diese schalenförmige Gehäuseteile werden im Tiefziehverfahren hergestellt. Dabei handelt es sich um eine Kaltverformung.

Zum anderen sind Gasgeneratoren mit einem zylindrischen Aufbau bekannt, bei dem ein erster langgestreckter Zylinder die Brennkammer darstellt. Diese Gasgeneratoren werden als Rohrgasgeneratoren bezeichnet. Die Brennkammer wird mit dem Treibstoff, dem Füllmaterial und der Anzündeeinheit bestückt und dann stirnseitig verschlossen. In der Wand des Brennkammerzylinders befinden sich über die ganze Fläche hinweg die Brennkammeröffnungen an denen das Gas von der Brennkammer in die Filterkammer gelangen kann. Über diese Anordung wird ein weiterer Zylinder geschoben, in welchem sich das Filtermaterial befindet. Der zweite Zylinder hat einen größeren Durchmesser wie der Brennkammerzylinder und ist über seine ganze Fläche mit Öffnungen bedeckt. Diese dienen als Abströmöffnungen für das gereinigte und gekühlte Gas, so daß das Gas in den Verbraucher gelangen kann.
Auch hier sind beide rohrförmigen Zylinder in der Tiefziehtechnik durch eine Kaltverformung hergestellt worden.

Auch ist aus der EP 0 382 552 A2 ein Rohrgasgenerator bekannt, der zwei Brennkammer mit je einer Anzündeinheit beinhaltet. Die zylinderförmige, einteilige Außenwand an der sich die Ausströmöffnungen befinden, hat im Innern eine kreisförmige Zwischenwand, die den Außenzylinder im Innern in zwei Kammern abtrennt. In jeder dieser Kammern befindet sich eine zylinderförmige Filtereinheit in der sich wiederum die zylinderförmige Brennkammer mit dem Treibstoff befindet. Im Innern jeder Brennkammer ist neben dem Treibstoff und dem Füllmaterial je eine Anzündeinheit. Die beiden offenen Enden der Außenwand werden an jeder Seite mit einem Deckel verschlossen. An den Deckeln ist je ein Anzünder derart angebracht, daß er in die Anzündkammer ragt. Auch bei dieser Anordnung sind beide Brennkammerzylinder und der Filterkammerzylinder mit Hilfe der Tiefziehtechnik in Ihre Form gebracht worden.

**Nachteilig an diesen Anordnungen** ist jedoch, daß bei den Rohrgasgeneratoren sehr viele Einzelteile benötigt werden. Bei den Rundgasgeneratoren dagegen müssen die Gehäuseteile sehr aufwendig hergestellt werden. Weitere Nachteile ergeben sich bzgl. der Lösung aus der EP 0 382 552 A2. Hier wird für eine zusätzliche Brennkammer jeweils ein weiterer rohrförmiger Brennkammerzylinder benötigt.

**Der Erfindung liegt daher die Aufgabe zugrunde** Gasgeneratoren der eingangs genannten Art zu schaffen, bei denen die Anzahl an Gehäuseteilen reduziert wurde und bei denen die Herstellung der Gehäuseteile unkompliziert und kostengünstig ist.

**Diese Aufgabe wird erfindungsgemäß durch die kennzeichnenden Merkmale des Patentanspruches 1 gelöst.** Hiernach bildet ein Gehäuseteil, welches im Strangpreßverfahren oder in einer anderen Heißverformungstechnik hergestellt wurde die vollständigen Seitenwände von mehreren Kammern aus.

Vorteilhafte Weiterbildungen der Erfindung ergeben sich aus den abhängigen Ansprüchen. Hierbei werden die Brennkammeraustrittsöffnungen und die Filterkammeraustrittsöffnungen auf entgegengesetzten Seiten angebracht, so daß der Weg des Gases, im Falle einer starken Verschmutzung oder hohen Temperaturen, durch die Filterkammer möglichts lang ist. Ist dagegen das Gas nicht zu heiß und nur leicht verunreinigt, können die Brennkammeraustrittsöffnungen auch radial zu den Filterkammeröffnungen angeordnet sein, so daß der Weg des Gases durch die Filterkammer nur sehr kurz ist.
Auch können bei derartigen Gasgeneratoren mehrere Brennkammer angeordnet sein, die unabhängig voneinander gezündet werden können. Weiterhin ist der Querschnitt derartiger Generatoren bzw. der Querschnitt der Kammern unabhängig voneinander und beliebig wählbar. Desweiteren kann das kammerbildende Gehäuseteil an den beiden offenen Enden mit Deckeln verschlossen werden.

**Die mit der Erfindung erzielten Vorteile bestehen** insbesondere darin, daß die Anzahl der Bauteile reduziert, der Herstellungsaufwand vereinfacht und die Herstellungskosten verringert werden. Außerdem ergeben sich bei derartigen Gasgeneratoren eine Vielzahl von Gestaltungsmöglichkeiten wie z.B. eine kreisförmiger Brennkammer bei einer viereckigen Außenkontur, welche durch die Filterkammerwand festgelegt wird. Auch kann die Strömungsführung durch eine entsprechende Gestaltung der Innenkontur optimiert werden. Ein weiterer Vorteil ergibt sich durch eine erhöhte Filter- und Kühlwirkung, da die Austrittsöffnungen so gewählt werden können, daß der Weg des Gases durch die Filterkammer möglichst lang ist. Auch können bei derartigen Gasgeneratoren mehrere unabhängige Brennkammern auf einfache Weise angeordnet werden, so daß mehrstufige Gasgeneratoren realisiert werden können. Ebenfalls können im Strangpreßverfahren oder einer anderer Heißverformungstechnik sehr lange mit mehreren Kammern ausgestattetete Röhren ausgebildet werden, die dann nur noch auf die den Anforderungen entsprechende Länge zugeschnitten werden.

Die **Ausführungsbeispiele** der Erfindung und ihre vorteilhaften Weiterbildungen werden im folgenden anhand mehrerer Zeichnungen dargestellt.
- **Figur 1:**: Erfindungsgemäßer Gasgenerator mit einer Brennkammer und axialer Durchströmumg der Filterkammer
- **Figur 2:**: Erfindungsgemäßer Gasgenerator mit einer Brennkammer und radialer Durchströmung der Filterkammer
- **Figur 3:**: Erfindungsgemäßer Gasgenerator mit zwei Brennkammmern und axialer Durchströmung der Filterkammer
- **Figur 4:**: Erfindungsgemäßer Gasgenerator mit zwei Brennkammern und radialer Durchströmung der Filterkammer
- **Figur 5:**: Weitere Verschlußmöglichkeit für erfindungsgemäßen Gasgenerator

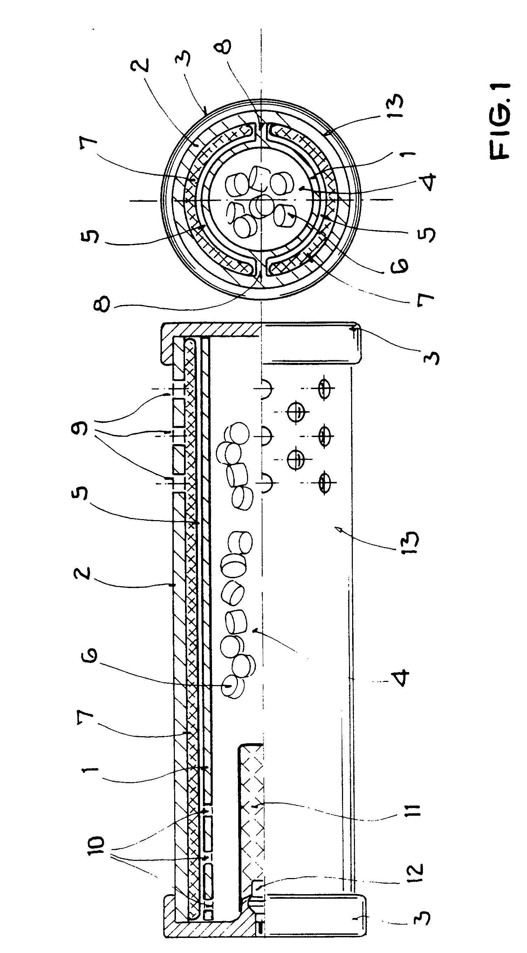

**Figur 1** zeigt einen erfindungsgemäßen Gasgenerator mit einer Brennkammer **4** und axialer Durchströmumg der Filterkammer **5.** Der in dieser Anwendung dargestellte Gasgenerator besteht aus drei einzelnen Gehäuseteilen: zwei Deckeln **3** und einem Aufnahmerohr **13.** Das Aufnahmerohr **13** bildet sowohl eine Filterkammer **5** als auch eine Brennkammer **4** aus. Die beiden Kammern sind durch Seitenwände, der Brennkammerwand **1** und der Filterkammerwand **2,** voneinander abgetrennt. Die innere Seitenwand -die Brennkammerwand **1-** begrenzt die Brennkammer **4.** Die äußere Seitenwand -die Filterkammerwand **2**-begrenzt die Filterkammer **5.** Im Anwendungsbeispiel ist die Filterkammerwand **2** für die Außenkontur des Gasgenerators verantwortlich.
Die Seitenwände sind z.B. mit einem oder mehreren Stegen **8** miteinander verbunden. Ein solcher stablier einteiliger Aufbau ist nur durch eine Heißverformung, wie zum Beispiel dem Strangpreßverfahren, realisierbar. Hiermit können auch sehr lange Aufnahmerohre **13** hergestellt werden, die dann auf die gewünschte Länge zugeschnitten werden können. Dadurch lassen sich unterschiedliche Treibstoffmengen **6** einfüllen. Auch kann bei der Herstellung eines solchen Aufnahmerohrs **13** der Querschnitt beliebig gewählt werden. So sind mit diesem Verfahren z.B auch rechteckige, quadratische, dreieckige, rund, ovale, etc. Querschnittsformen beim Gasgenerator möglich. Nach der Fertigstellung des Aufnahmerohrs werden zweckmäßigerweise die Brennkammeraustrittsöffnungen **10** von innen her und die Filterkammeraustrittsöffnungen **9** von außen her in die Seitenwände eingearbeitet. Im abgebildeten Fall befinden sich die Brennkammeraustrittsöffnungen **10** auf der axial entgegengesetzten Seite wie die Filterkammeraustrittsöffnungen **9.** Dies hat zur Folge, daß der Weg durch den Filter **7,** den das Gas nehmen muß sehr lang ist. Dadurch wird erreicht, daß der Filter **7** über einen längeren Zeitraum hinweg das Gas reinigt und abkühlt und so die Filter- und Kühlwirkung optimiert wird. Zum Bestücken des auf beiden Seiten offenen Aufnahmerohres **13** wird es auf einer Seite mit einem Deckel **3** verschlossen. Dies kann durch Schrauben, Schweißen, Nieten, etc. erfolgen. Das Aufnahmerohr kann nun bestückt werden. In die Brennkammer wird der Treibtoff **6** und je nach Bedarf ein Füllelement bzw. Berstmembran (nicht abgebildet) eingefüllt anschließend kann die Anzündeeinheit **11** in der Brennkammer **4** positoniert werden. Die Filterkammer **5** wird mit dem Filtermaterial **7** bestückt. Nach der vollständigen Bestückung kann nun auch das Aufnahmerohr **13** an der noch offenen Seite mit einem Deckel **3** auf beliebige Weise (z.B.: Schrauben, Schweißen, Nieten, etc.) verschlossen werden. Am Deckel befinden sich die Anzünder **12,** der so angebracht ist, daß er in die Anzündeeinheit **11** ragt.

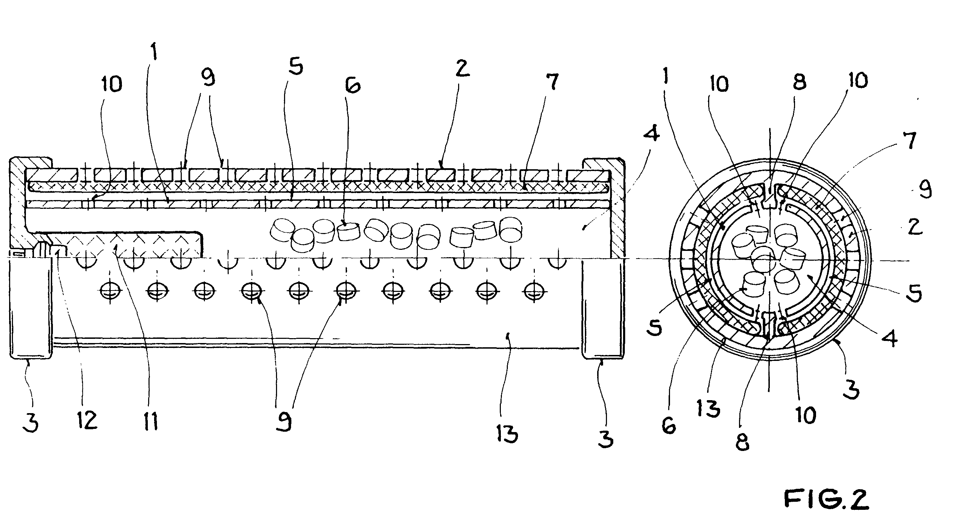

**Figur 2** zeigt einen erfindungsgemäßen Gasgenerator mit einer Brennkammer **4** und radialer Durchströmung der Filterkammer **5.** Der in dieser Anwendung dargestellte Gasgenerator besteht aus drei einzelnen Gehäuseteilen: zwei Deckeln **3** und einem Aufnahmerohr **13.** Das Aufnahmerohr **13** bildet sowohl eine Filterkammer **5** als auch eine Brennkammer **4** aus. Die beiden Kammern sind durch Seitenwände, der Brennkammerwand **1** und der Filterkammerwand **2,** voneinander abgetrennt. Die innere Seitenwand -die Brennkammerwand **1-** begrenzt die Brennkammer **4.** Die äußere Seitenwand -die Filterkammerwand **2**-begrenzt die Filterkammer **5.** Im Anwendungsbeispiel ist die Filterkammerwand **2** für die Außenkontur des Gasgenerators verantwortlich.
Die Seitenwände sind z.B. mit einem oder mehreren Stegen **8** miteinander verbunden. Ein solcher stablier einteiliger Aufbau ist nur durch eine Heißverformung, wie zum Beispiel dem Strangpreßverfahren, realisierbar. Hiermit können auch sehr lange Aufnahmerohre **13** hergestellt werden, die dann auf die gewünschte Länge zugeschnitten werden können. Dadurch lassen sich unterschiedliche Treibstoffmengen **6** einfüllen. Auch kann bei der Herstellung eines solchen Aufnahmerohrs **13** der Querschnitt beliebig gewählt werden. So sind mit diesem Verfahren z.B auch rechteckige, quadratische, dreieckige, rund, ovale, etc. Querschnittsformen beim Gasgenerator möglich. Nach der Fertigstellung des Aufnahmerohrs werden zweckmäßigerweise die Brennkammeraustrittsöffnungen **10** von innen her und die Filterkammeraustrittsöffnungen **9** von außen her in die Seitenwände eingearbeitet. Im abgebildeten Fall befinden sind die Brennkammeraustrittsöffnungen **10** gleichmäßig über die Brennkammerwand verteilt. Auch die Filterkammeraustrittsöffnungen **9** sind derartig angeordnet. Dies hat zur Folge, daß der Weg durch den Filter **7,** den das Gas nehmen muß, wie bei herkömmlichen Gasgeneratoren radial angeordnet ist. Zum Bestücken des auf beiden Seiten offenen Aufnahmerohres **13** wird es auf einer Seite mit einem Deckel **3** verschlossen. Dies kann durch Schrauben, Schweißen, Nieten, etc. erfolgen. Das Aufnahmerohr kann nun bestückt werden. in die Brennkammer wird der Treibstoff **6** und je nach Bedarf ein Füllelement bzw. Berstmembran (nicht abgebildet) eingefüllt anschließend kann die Anzündeeinheit **11** in der Brennkammer **4** positoniert werden. Die Filterkammer **5** wird mit dem Filtermaterial **7** bestückt. Nach der vollständigen Bestückung kann nun auch das Aufnahmerohr **13** an der noch offenen Seite mit einem Deckel **3** auf beliebige Weise (z.B.: Schrauben, Schweißen, Nieten, etc.) verschlossen werden. Am Deckel befindet sich der Anzünder **12,** der so angebracht ist, daß er in die Anzündeeinheit **11** ragt.

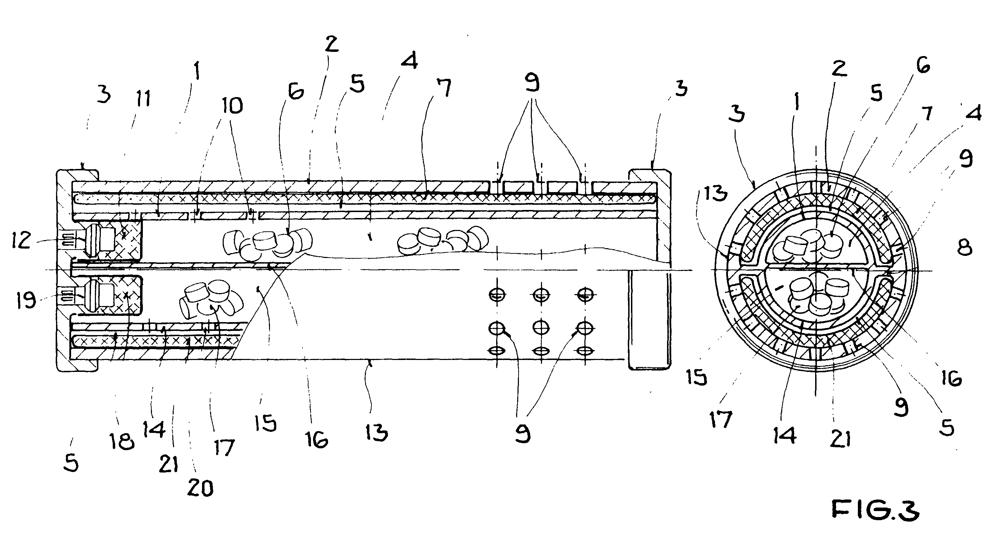

**Figur 3** zeigt einen erfindungsgemäßen Gasgenerator mit zwei Brennkammern **4, 15** und axialer Durchströmung der Filterkammer **5.** Der in dieser Anwendung dargestellte Gasgenerator besteht aus drei einzelnen Gehäuseteilen: zwei Deckeln **3** und einem Aufnahmerohr **13.** Das Aufnahmerohr **13** bildet sowohl eine Filterkammer **5** als auch zwei Brennkammern **4** und **15** aus. Die drei Kammern sind durch Seitenwände, den beiden Brennkammerwänden **1** und **14** mit der gemeinsamen Zwischenwand **16** und der Filterkammerwand **2,** voneinander abgetrennt. Im Anwendungsbeispiel ist die Filterkammerwand **2** für die Außenkontur des Gasgenerators verantwortlich.
Die Seitenwände **1**, **14** und **2** sind z.B. mit einem oder mehreren Stegen **8** oder mit einer durchgehenden Zwischenwand **16** miteinander verbunden. Ein solcher stablier einteiliger Aufbau ist nur durch eine Heißverformung, wie zum Beispiel dem Strangpreßverfahren, realisierbar. Hiermit können auch sehr lange Aufnahmerohre **13** hergestellt werden, die dann auf die gewünschte Länge zugeschnitten werden können. Dadurch lassen sich unterschiedliche Treibstoffmengen **6** und **17** einfüllen. Auch kann bei der Herstellung eines solchen Aufnahmerohrs **13** der Querschnitt beliebig gewählt werden. So sind mit diesem Verfahren z.B auch rechteckige, quadratische, dreieckige, rund, ovale, etc. Querschnittsformen beim Gasgenerator möglich. Nach der Fertigstellung des Aufnahmerohrs werden zweckmäßigerweise die Brennkammeraustrittsöffnungen **10** bzw. **20** von innen her und die Filterkammeraustrittsöffnungen **9** von außen her in die Seitenwände eingearbeitet. Im abgebildeten Fall befinden sich die Brennkammeraustrittsöffnungen **10** bzw. **20** auf der axial entgegengesetzten Seite wie die Filterkammeraustrittsöffnungen **9.** Dies hat zur Folge, daß der Weg durch den Filter **7** bzw. **21,** den das Gas nehmen muß sehr lang ist. Dadurch wird erreicht, daß der Filter **7** bzw. **21** über einen längeren Zeitraum hinweg das Gas reinigt und abkühlt und so die Filter- und Kühlwirkung optimiert wird. Zum Bestücken des auf beiden Seiten offenen Aufnahmerohres **13** wird es auf einer Seite mit einem Deckel **3** verschlossen. Dies kann durch Schrauben, Schweißen, Nieten, etc. erfolgen. Das Aufnahmerohr kann nun bestückt werden. In die Brennkammern wird der Treibstoff **6** bzw. **17** und je nach Bedarf ein Füllelement bzw. Berstmembran (nicht abgebildet) eingefüllt anschließend kann die Anzündeeinheit **11** und **18** in der Brennkammer **4** und **15** positioniert werden. Die Filterkammer **5** wird mit dem Filtermaterial **7** bzw. **21** bestückt. Nach der vollständigen Bestückung kann nun auch das Aufnahmerohr **13** an der noch offenen Seite mit einem Deckel **3** auf beliebige Weise (z.B.: Schrauben, Schweißen, Nieten, etc.)verschlossen werden. Am Deckel befinden sich die Anzünder **12** und **19,** die so angebracht sind, daß sie in die Anzündeeinheit **11** und **18** ragen.

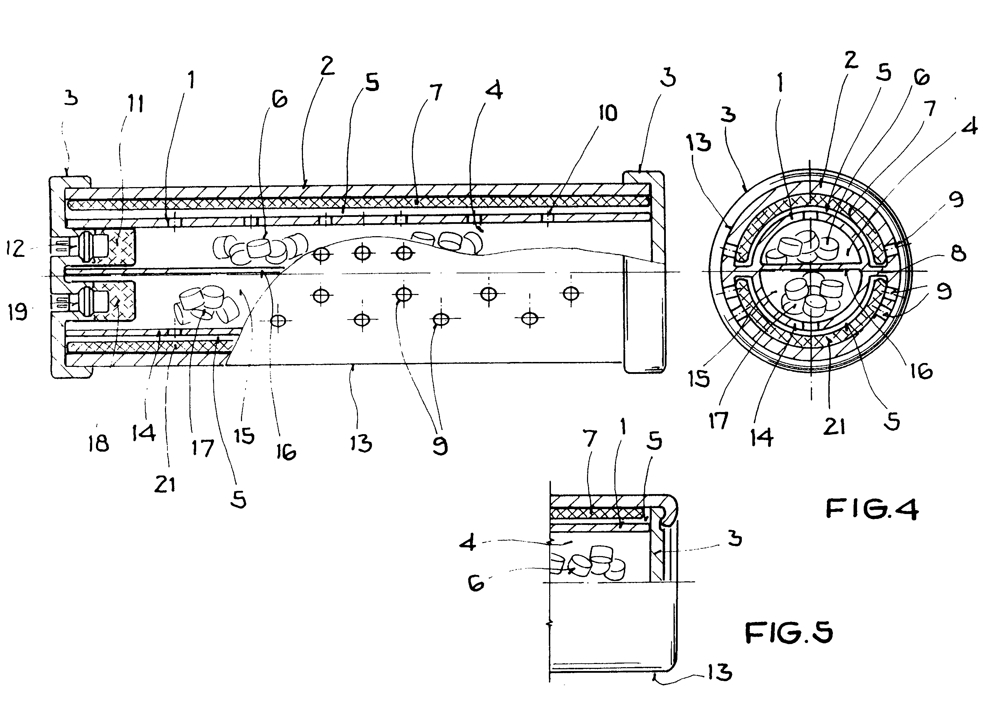

**Figur 4** zeigt einen erfindungsgemäßer Gasgenerator mit zwei Brennkammern **4, 15** und radialer Durchströmung der Filterkammer **5.** Der in dieser Anwendung dargestellte Gasgenerator besteht aus drei einzelnen Gehäuseteilen: zwei Deckeln **3** und einem Aufnahmerohr **13.** Das Aufnahmerohr **13** bildet sowohl eine Filterkammer **5** als auch zwei Brennkammern **4** und **15** aus. Die drei Kammern sind durch Seitenwände, den beiden Brennkammerwänden **1** und **14** mit der gemeinsamen Zwischenwand **16** und der Filterkammerwand **2,** voneinander abgetrennt. Im Anwendungsbeispiel ist die Filterkammerwand **2** für die Außenkontur des Gasgenerators verantwortlich.
Die Seitenwände **1, 14** und **2** sind z.B. mit einem oder mehreren Stegen **8** oder mit einer durchgehenden Zwischenwand **16** miteinander verbunden. Ein solcher stablier einteiliger Aufbau ist nur durch eine Heißverformung, wie zum Beispiel dem Strangpreßverfahren, realisierbar. Hiermit können auch sehr lange Aufnahmerohre **13** hergestellt werden, die dann auf die gewünschte Länge zugeschnitten werden können. Dadurch lassen sich unterschiedliche Treibstoffmengen **6** und **17** einfüllen. Auch kann bei der Herstellung eines solchen Aufnahmerohrs **13** der Querschnitt beliebig gewählt werden. So sind mit diesem Verfahren z.B auch rechteckige, quadratische, dreieckige, rund, ovale, etc. Querschnittsformen beim Gasgenerator möglich. Nach der Fertigstellung des Aufnahmerohrs werden zweckmäßigerweise die Brennkammeraustrittsöffnungen **10** bzw. **20** von innen her und die Filterkammeraustrittsöffnungen **9** von außen her in die Seitenwände eingearbeitet. Im abgebildeten Fall befinden sich die Brennkammeraustrittsöffnungen **10** bzw. **20** radial über die ganze Seitenwand **1** bzw. **14** verteilt sind. Auch die Filterkammeraustrittsöffnungen 9 sind radial über die Filterkammerwand **2** verteilt. Dies hat zur Folge, daß der Weg durch den Filter **7** bzw. **21,** den das Gas nehmen muß sehr kurz ist. Dadurch wird erreicht, daß der Filter **7** bzw. **21** über einen kurzen Zeitraum hinweg das Gas reinigt und abkühlt wie es zur Zeit üblich ist. Zum Bestücken des auf beiden Seiten offenen Aufnahmerohres **13** wird es auf einer Seite mit einem Deckel **3** verschlossen. Dies kann durch Schrauben, Schweißen, Nieten, etc. erfolgen. Das Aufnahmerohr kann nun bestückt werden. In die Brennkammern wird der Treibstoff **6** bzw. **17** und je nach Bedarf ein Füllelement bzw. Berstmembran (nicht abgebildet) eingefüllt anschließend kann die Anzündeeinheit **11** und **18** in der Brennkammer **4** und **15** positioniert werden. Die Filterkammer **5** wird mit dem Filtermaterial **7** bzw. **21** bestückt. Nach der vollständigen Bestückung kann nun auch das Aufnahmerohr **13** an der noch offenen Seite mit einem Deckel **3** auf beliebige Weise (z.B.: Schrauben, Schweißen, Nieten, etc.) verschlossen werden. Am Deckel befinden sich die Anzünder **12** und **19,** die so angebracht sind, daß sie in die Anzündeeinheit **11** und **18** ragen.

**Figur 5** zeigt eine weitere Verschlußmöglichkeit für einen erfindungsgemäßen Gasgenerator. Hierbei umfaßt der Deckel **3** nicht das ganze Aufnahmerohr **13.** Der Deckel **3** wird hier in das Aufnahmerohr **13** gelegt bis es auf der Brennkammerwand **1** aufliegt, so daß er an der Filterkammerwand **2** befestigt werden kann. Die Befestigung ist in diesem Ausführungsbeispiel so gewählt, daß die Filterkammerwand **2** in eine Nut des Deckels **3** gebogen wird und durch Nieten oder Schweißen zusätzlich fixiert werden kann.

## Patentansprüche

1. Gasgenerator, insbesondere für passive Rückhaltesysteme in Kraftfahrzeugen, mit einem aus wenigstens einem Deckel (3) und einem röhrenförmigen Gehäuseteil (13) bestehenden Gehäuse, in dem mehrere, jeweils von einem Mantel, einer Decke und einem Boden begrenzte Kammern (4, 5, 15) ausgebildet sind, wobei der Mantel aus einer oder mehreren Wänden (1, 2, 8, 16) gebildet ist, dadurch gekennzeichnet, daß das röhrenförmige Gehäuseteil (13) wenigstens zwei ineinander liegende, einteilig ausgebildete Röhren aufweist, die durch wenigstens einen Steg (8) miteinander verbunden sind, und daß das Gehäuseteil durch Strangpressen oder mittels eines anderen Heißverformungsverfahrens hergestellt ist.

2. Gasgenerator nach Anspruch 1, dadurch gekennzeichnet, daß die ineinander liegenden Röhren wenigstens eine innere Kammer (4) und eine die innere Kammer umschließende äußere Kammer (5) ausbilden und der Querschnitt beliebig, vorzugsweise rund, eckig oder segmentförmig, ist.

3. Gasgenerator nach Anspruch 1, dadurch gekennzeichnet, daß die ineinander liegenden Röhren wenigstens zwei radial nebeneinander liegende innere Kammern (4, 15) sowie eine die inneren Kammern umschließende äußere Kammer (5) ausbilden, wobei die inneren Kammern (4, 15) eine gemeinsame Zwischenwand (16) aufweisen, und wobei der Querschnitt beliebig, vorzugsweise rund, eckig oder segmentförmig ist.

4. Gasgenerator nach einem der vorhergehenden Ansprüche, dadurch gekennzeichnet, daß mindestens eine der Kammern als Brennkammer (4, 15) mit Brennkammeraustrittsöffnungen (10) an der dazugehörigen Wand
(1) und eine andere Kammer als Filterkammer (5) mit Filterkammeraustrittsöffnungen (9) an der dazugehörigen Wand (2) ausgebildet ist, wobei die Brennkammeraustrittsöffnungen (10) und die Filterkammeraustrittsöffnungen (9) axial entgegengesetzt angeordnet sind.

5. Gasgenerator nach einem der Ansprüche 1 bis 3, dadurch gekennzeichnet, daß mindestens eine der Kammern als Brennkammer (4, 15) mit Brennkammeraustrittsöffnungen (10) an der dazugehörigen Seitenwand (1) und eine andere Kammer als Filterkammer (5) mit Filterkammeraustrittsöffnungen (9) an der dazugehörigen Seitenwand (2) ausgebildet ist, wobei die Filterkammeraustrittsöffnungen (9) radial um die Brennkammeraustrittsöffnungen (10) angeordnet sind.

6. Gasgenerator nach einem der vorhergehenden Ansprüche, dadurch gekennzeichnet, daß mehrere Kammern als unabhängige Brennkammern (4, 15) ausgebildet sind.

7. Gasgenerator nach einem der vorhergehenden Ansprüche, dadurch gekennzeichnet, daß das röhrenförmige Gehäuseteil (13) an seinen beiden offenen Enden mit je einem Deckel (3) durch eine beliebige Verbindungstechnik, wie z.B. Schweißen, Schrauben oder Nieten, verschlossen ist und so die Decke bzw. der Boden von einer oder mehreren Kammern entsteht.

8. Gasgenerator nach einem der vorhergehenden Ansprüche, dadurch gekennzeichnet, daß die Querschnitte der Röhren unterschiedlich sind.

## Claims

1. A gas generator, in particular for passive restraint systems in motor vehicles, comprising a housing consisting of at least one cover (3) and a pipe-shaped housing component (13), the housing having a plurality of chambers (4, 5, 15) formed therein which are each delimited by a shell, a roof and a bottom, the shell being formed by one or a plurality of walls (1, 2, 8, 16), characterized in that the pipe-shaped housing component (13) has at least two one-part pipes which are located inside each other and are linked to each other by at least one cross-piece (8), and in that the housing component is manufactured by extrusion or by means of another hot-working process.

2. The gas generator according to claim 1, characterized in that the pipes located inside each other form at least an inner chamber (4) and an outer chamber (5) enclosing the inner chamber and that the cross-section is of any desired shape, preferably round, square, or segment-shaped.

3. The gas generator according to claim 1, characterized in that the pipes located inside each other form at least two inner chambers (4, 15) located radially side by side and an outer chamber (5) enclosing the inner chambers, the inner chambers (4, 15) having a common partition wall (16), and the cross-section being of any desired shape, preferably round, square, or segment-shaped.

4. The gas generator according to any of the preceding claims, characterized in that at least one of the chambers is constructed as a combustion chamber (4, 15) having combustion chamber outlets (10) in the associated wall (1) and another chamber is constructed as a filter chamber (5) having filter chamber outlets (9) in the associated wall (2), the combustion chamber outlets (10) and the filter chamber outlets (9) being arranged on axially opposite sides.

5. The gas generator according to any of the claims 1 to 3, characterized in that at least one of the chambers is constructed as a combustion chamber (4, 15) having combustion chamber outlets (10) in the associated side wall (1) and another chamber is formed as a filter chamber (5) having filter chamber outlets (9) in the associated side wall (2), the filter chamber outlets (9) being arranged radially around the combustion chamber outlets (10).

6. The gas generator according to any of the preceding claims, characterized in that several chambers are constructed as independent combustion chambers (4, 15).

7. The gas generator according to any of the preceding claims, characterized in that the pipe-shaped housing component (13) is closed at its two open ends by one cover (3) each, using any technical means of fastening such as e.g. welding, screwing, or riveting, and in this way providing either of the roof and the bottom of one or a plurality of chambers.

8. The gas generator according to any of the preceding claims, characterized in that the cross-sections of the pipes are all different.

## Revendications

1. Générateur de gaz, en particulier pour des systèmes de retenue passifs dans des véhicules, comportant un boîtier constitué par au moins un couvercle (3) et une partie de boîtier (13) de forme tubulaire, dans lequel sont réalisées plusieurs chambres (4, 5, 15) délimitées chacune par une enveloppe, un plafond et un fond, l'enveloppe étant formée par une ou plusieurs parois (1, 2, 8, 16), caractérisé en ce que la partie de boîtier (13) de forme tubulaire présente au moins deux tubes réalisés en une partie et agencés l'un dans l'autre, qui sont reliés l'un à l'autre par au moins une traverse (8), et en ce que la partie de boîtier est fabriquée par extrusion ou par un autre procédé de formage à chaud.

2. Générateur de gaz selon la revendication 1, caractérisé en ce que les tubes agencés les uns dans les autres forment au moins une chambre intérieure (4) et une chambre extérieure (5) entourant la chambre intérieure et en ce que la section transversale a une forme quelconque, de préférence ronde, rectangulaire ou de segment.

3. Générateur de gaz selon la revendication 1, caractérisé en ce que les tubes agencés les uns dans les autres forment au moins deux chambres intérieures (4, 15) agencées radialement l'une à côté de l'autre, ainsi qu'une chambre extérieure (5) entourant les chambres intérieures, les chambres intérieures (4, 15) présentant une paroi intermédiaire (16) commune et la section ayant une forme quelconque, de préférence ronde, rectangulaire ou de segment.

4. Générateur de gaz selon l'une quelconque des revendications précédentes, caractérisé en ce qu'au moins une des chambres est réalisée sous forme de chambre de combustion (4, 15) avec des orifices de sortie (10) de chambre de combustion dans la paroi (1) associée et une autre chambre est réalisée sous forme de chambre de filtration (5) avec des orifices de sortie (9) de chambre de filtration dans la paroi (2) associée, les orifices de sortie (10) de chambre de combustion étant agencés axialement à l'opposé des orifices de sortie (9) de chambre de filtration.

5. Générateur de gaz selon l'une quelconque des revendications 1 à 3, caractérisé en ce qu'au moins une des chambres est réalisée sous forme de chambre de combustion (4, 15) avec des orifices de sortie (10) de chambre de combustion dans la paroi latérale (1) associée et une autre chambre est réalisée sous forme de chambre de filtration (5) avec des orifices de sortie (9) de chambre de filtration dans la paroi latérale (2) associée, les orifices de sortie (9) de chambre de filtration étant agencés radialement autour des orifices de sortie (10) de chambre de combustion.

6. Générateur de gaz selon l'une quelconque des revendications précédentes, caractérisé en ce que plusieurs chambres sont réalisées sous forme de chambres de combustion indépendantes (4, 15).

7. Générateur de gaz selon l'une quelconque des revendications précédentes, caractérisé en ce que la partie de boîtier (13) de forme tubulaire est fermée à chacune de ses deux extrémités ouvertes par un couvercle au moyen d'une technique d'assemblage quelconque, comme par exemple par soudure, vissage ou rivetage, et formant ainsi le plafond ou le fond respectif d'une ou de plusieurs chambres.

8. Générateur de gaz selon l'une quelconque des revendications précédentes, caractérisé en ce que les sections transversales des tubes sont différentes.
